# EUROPÄISCHE PATENTSCHRIFT

(11) **EP 3 622 128 B1**
(45) Veröffentlichungstag und Bekanntmachung des Hinweises auf die Patenterteilung: **27.10.2021**
(21) Anmeldenummer: 18722985.1
(22) Anmeldetag: 07.05.2018
(51) Int. Cl.: E04F 10/02

(54) **ABSCHIRMVORRICHTUNG FÜR BESCHATTUNGS- UND REGENSCHUTZZWECKE**
SHIELDING DEVICE FOR SHADING AND RAIN PROTECTION PURPOSES
DISPOSITIF DE PROTECTION SERVANT À CRÉER DE L'OMBRE ET À PROTÉGER DE LA PLUIE

(30) Priorität: 08.05.2017 DE 102017109789
(43) Veröffentlichungstag der Anmeldung: 18.03.2020
(73) Patentinhaber: ETTLIN AKTIENGESELLSCHAFT, 76275 Ettlingen (DE)
(72) Erfinder: RAITHEL, Tobias, 72458 Albstadt (DE); MAETSCHKE, Oliver, 76275 Ettlingen (DE)
(74) Vertreter: Pfiz, Thomas
(86) Internationale Anmeldenummer: PCT/EP2018/061664
(87) Internationale Veröffentlichungsnummer: WO 2018/206482

(56) Entgegenhaltungen:
- DE-U1- 8 327 646
- DE-U1- 9 217 218
- DE-U1- 20 017 882
- DE-U1-202011 107 186
- US-A- 5 431 979
- US-A1- 2003 082 969
- US-A1- 2004 189 042
- Anonymous: "Insulated Tarps", , 30. September 2015 (2015-09-30), XP055483346, Gefunden im Internet: URL:https://www.eagleind.com/wp-content/up loads/2015/09/Insulated-Tarps.pdf [gefunden am 2018-06-12]

## Beschreibung

Die Erfindung betrifft eine Abschirmvorrichtung für Beschattungs- und Regenschutzzwecke mit einem flächig aufgespannten oder ausrollbaren, eine Abschirmung gegen Witterungseinflüsse, insbesondere gegen Sonneneinstrahlung und/oder Regen bildenden textilen Flächengebilde, welches als Gewebe gitterartig miteinander verbundene Kettfäden und Schussfäden aufweist.

Aus der EP 2 527 507 A1 ist eine Wetterschutzvorrichtung bekannt, bei der die Kett- und Schussfäden langgestreckte und vergleichsweise enge Gitteröffnungen begrenzen, wobei die Wasserabweisung durch ein Hydrophobierungsmittel unterstützt wird. Auf diese Weise kann allerdings die Durchsicht und der Luftdurchtritt nur durch Veränderung der Gewebeparameter angepasst werden.

Ausgehend hiervon liegt der Erfindung die Aufgabe zugrunde, die im Stand der Technik bekannten Vorrichtungen weiter zu verbessern und eine Schutzvorrichtung mit möglichst variabel einstellbaren Gebrauchseigenschaften zu schaffen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, ein vorgefertigtes Gewebe als Tragstruktur für eine in ihren Eigenschaften einstellbare Funktionsbeschichtung zu nutzen. Dementsprechend wird erfindungsgemäß vorgeschlagen, dass auf das textile Flächengebilde als Träger an einer Gewebeseite eine durch feste Schaumwände voneinander getrennte Schaumporen aufweisende Schaumschicht durch ein Beschichtungsverfahren aufgebracht ist, wobei die Schaumschicht offenporig ausgebildet ist, und dass das textile Flächengebilde an seiner Oberseite mit der Schaumschicht versehen ist. Durch die Schaumschicht ist es möglich, verschiedene Eigenschaften wie Luftdurchlässigkeit, Durchsicht, Beschattung und Wasserabweisung in einem gewünschten Maß einzustellen, ohne dass das Trägergewebe verändert werden müsste. Grundsätzlich ist es aber auch möglich, eine zusätzliche Variabilität durch Gewebeanpassungen zu erreichen. Die Schaumschicht ist offenporig ausgebildet, so dass quer zur Schichtebene ein gewisser Öffnungsgrad erzielt wird.

Günstig ist es hier, wenn die Schaumporen einen Durchmesser im Bereich von 0,01 bis 0,5 mm aufweisen.

Um eine stabile und gut haftende Beschichtung zu schaffen, ist es von Vorteil, wenn die Schaumschicht aus einem aus der folgenden Gruppe ausgewählten geschäumten Kunststoffmaterial besteht: Polyurethan, Polyester, Polyvinylchlorid, Polyamide, Polyacrylate, Acryläureester und deren jeweilige Copolymere, Silikone. Bevorzugt besteht die Schaumschicht aus einem ausgehärteten Polyurethanschaum.

Zur Verbesserung der wasserabweisenden Eigenschaften ist es vorteilhaft, wenn die Schaumschicht mit einem Hydrophobierungsmittel hydrophob ausgerüstet ist.

Hinsichtlich der Durchsicht und Alterungsbeständigkeit ist es weiter von Vorteil, wenn die Schaumschicht durch Ruß oder Pigmente dunkel eingefärbt ist bzw. mit einem als UV-Filter und/oder IR-Reflektor wirkenden Additiv versehen ist.

Für eine gleichmäßige Schichtdicke ist es günstig, wenn die Schaumschicht durch ein Beschichtungsverfahren, vorzugsweise durch Aufrakeln auf das textile Flächengebilde aufgebracht ist.

Vorteilhafterweise ist die Schaumschicht mit einem Flächengewicht im Bereich von 10 bis 100 g/m² auf das textile Flächengebilde aufgebracht.

Um eine besondere Dimensionsstabilität und Dichtheit der Gittergeometrie zu gewährleisten, ist es auch von Vorteil, wenn die Kettfäden und die Schussfäden in Dreherbindung durch Bindefäden miteinander verbunden sind, wobei die Bindefäden die voneinander abgewandten Außenseiten der Kett- und Schussfäden umschlingen.

Eine vorteilhafte Ausgestaltung sieht vor, dass das textile Flächengebilde in einer Halte- oder Spannvorrichtung für eine großflächige Abschirmung gehalten ist. Möglich ist es auch, dass das textile Flächengebilde mittels einer Wickelvorrichtung flächig ausrollbar ist. Weiterhin ist es denkbar, das textile Flächengebilde in einem Ausschnitt einer Folienfläche beispielsweise einer Zeltfolie einzubringen.

Vorteilhafterweise ist das textile Flächengebilde in einem Außenbereich beispielsweise vor einem Gebäude so angeordnet, dass es einen zu schützenden Bereich vor Wetter- bzw. Witterungseinflüssen abschirmt.

Im Folgenden wird die Erfindung anhand des in der Zeichnung schematisch dargestellten Ausführungsbeispiels näher erläutert. Es zeigen:
- Fig. 1: eine Abschirmvorrichtung für Beschattungs- und Regenschutzzwecke an einem Gebäude in schaubildlicher Darstellung;
- Fig. 2: ein mit einer Schaumschicht versehendes textiles Flächengebilde der Abschirmvorrichtung in ausschnittsweise vergrößerter schaubildlicher Darstellung;
- Fig. 3: eine ausschnittsweise Draufsicht auf das textile Flächengebilde und die darauf befindliche Schaumschicht;
- Fig. 4: ein Diagramm von Prüfergebnissen an verschiedenen Labormustern.

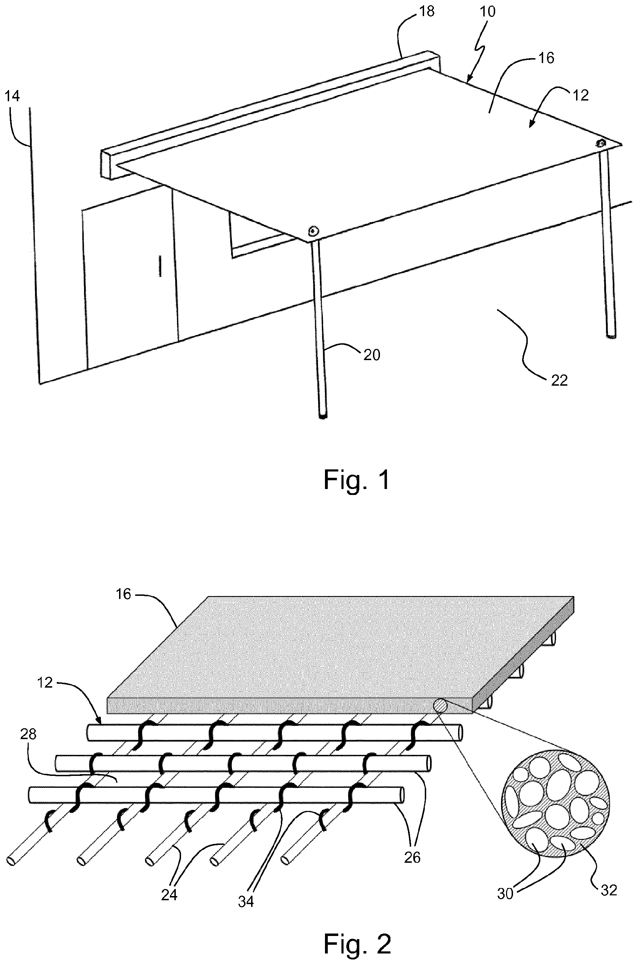

Die in Fig. 1 dargestellte Abschirm- bzw. Wetterschutzvorrichtung 10 umfasst ein textiles Flächengebilde 12, das als Abschirmung gegen Sonneneinstrahlung bzw. Regen außenseitig an einem Gebäude 14 aufgespannt ist und beispielsweise an seiner Oberseite mit einer Schaumschicht 16 versehen ist.

Hierfür ist das textile Flächengebilde 12 bahnförmig aus einer Wickelvorrichtung 18 ausziehbar und an seinem freien Ende an Stützen 20 fixierbar. Dabei wird ein Abschirmbereich 22 unter dem textilen Flächengebilde 12 vor direkter Sonnenstrahlung und vor Regen geschützt.

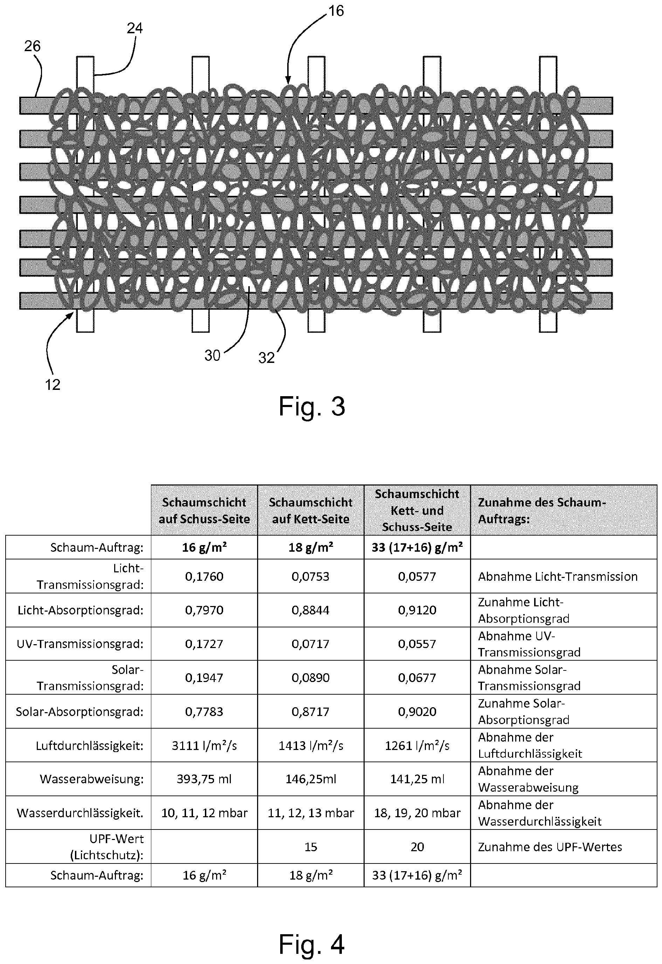

Wie in Fig. 2 und 3 nicht maßstäblich illustriert, weist das textile Flächengebilde 12 gitterartig miteinander verbundene Kettfäden 24 und Schussfäden 26 auf. Die Kettfäden 24 verlaufen mit relativ großem gegenseitigem Fadenabstand in Längsrichtung der Gewebebahn, während die Schussfäden 26 unter Einhaltung eines relativ engen gegenseitigen Fadenabstandes die Kettfäden 24 rechtwinklig kreuzen. Auf diese Weise werden in dem gitterförmigen Flächengebilde 12 langgestreckt-rechteckige Gitteröffnungen 28 freigehalten. Die Schaumschicht 16 weist Schaumporen bzw. Schaumzellen 30 auf, die durch feste Schaumwände 32 seitlich voneinander getrennt sind. Auf diese Weise wird in Verbindung mit den Gitteröffnungen 28 des textilen Flächengebildes 12 eine gewisse Durchsichtigkeit und Luftdurchlässigkeit gewährt, wohingegen ein Durchdringen von Regen oder unerwünschter Sonnenstrahlung durch die engen Spalte weitgehend verhindert wird.

Wie in Fig. 2 veranschaulicht, weist das textile Flächengebilde 12 eine zweilagige Gewebestruktur auf, in der die Kettfäden 24 und Schussfäden 26 geradlinig gestreckt sind und jeweils eine eigene ebene Fadenlage bilden, so dass die beiden Fadenlagen einseitig aufeinander aufliegen.

Die Kettfäden 24 und Schussfäden 26 werden durch dünne Bindefäden 34 nach Art einer Dreherbindung in ihrer gegenseitigen Lage fixiert. Die Bindefäden 34 durchqueren dabei die beiden Fadenlagen der Kettfäden 24 und Schussfäden 26 und umschlingen deren voneinander abgewandte Außenseiten.

Das so gebildete Gewebe ist durch die gestreckten Fadenlagen extrem dehnungsarm und formstabil. Die Kraft- und Dehnungs-Eigenschaften lassen sich in Kette und Schuss unabhängig voneinander einstellen. Es lassen sich sehr offene, aber auch sehr dichte Gewebe mit einer hohen Gleichmäßigkeit herstellen. Weiterhin können die beiden Seiten unabhängig voneinander mit der Schaumschicht 16 beschichtet werden, wobei es auch möglich ist, mehrere Schichten übereinander aufzubringen.

Zweckmäßig bestehen die Kett-, Schuss- und Bindefäden aus einem monofilen, polymeren Fadenmaterial, beispielsweise aus PET. Die Fadenstärken der Kett- und Schussfäden 24, 26 liegen im Bereich zwischen 0,08 bis 0,3 mm, während die dünneren Bindefäden 34 eine Stärke von 0,05 bis 0,1 mm besitzen.

Die Schaumschicht 16 ist offenporig bzw. offenzellig ausgebildet, d.h. die Schaumporen 30 sind nicht allseitig geschlossen, sondern nur in der Schichtebene durch Schaumwände 32 voneinander getrennt. Durch den variabel einstellbaren Beschichtungsauftrag ggf. mit einer wasserabweisenden Ausrüstung beispielsweise durch Fluorcarbon kann die Dichtigkeit bzw. Porosität eingestellt werden. Daher ist es möglich, Eigenschaften wie Luftdurchlässigkeit, Durchsicht, Wasserabweisung und Beschattungswirkung gezielt in eine gewünschte Richtung einzustellen.

Die Schaumschicht 16 kann aus einem ausgehärteten Polyurethanschaum bestehen, dessen Schaumporen durch geeignetes Aufschäumen vor dem Schaumauftrag in einem Bereich von O,01 bis 0,5 mm eng auf einen gewünschten Durchmesser eingestellt sein können. Die Schaumbeschichtung kann durch Aufrakeln auf das vorgefertigte Gewebe erzeugt werden, wobei das Gewebe bzw. textile Flächengebilde 12 unter einem Rakel hindurchtransportiert und dem Rakel eine Art von Schaumwalze zuführt wird. Dabei kann die Schaumschicht 16 mit einem Flächengewicht im Bereich von 10 bis 100 g/m² aufgebracht werden. Die gewünschte Schichtdicke kann beispielsweise im Bereich von 0,1 bis 1 mm eng definiert werden.

Die Schaumschicht 16 kann mit Additiven bzw. Ausrüstungen wie UV-Blockern und Hydrophobierungsmitteln weiter funktionalisiert werden. Insbesondere kann durch Pigmente (Ruß) für eine schwarze Einfärbung und damit auch für eine bessere Durchsichtigkeit und verzögerte UV-Alterung gesorgt werden. Grundsätzlich kann auch eine gewünschte optische bzw. gestalterische Wirkung eingestellt werden

Für die genannten Wetterschutzfunktionen bestehen vielfältige Einsatzmöglichkeiten, beispielsweise unter Vermeidung von Hitzestau auch als Markise, Sonnensegel, Schirm oder Zeltmaterial. Das Textilmaterial kann mittels einer Spann- oder Wickelvorrichtung platzsparend gefaltet oder aufgewickelt werden. Grundsätzlich ist auch eine permanente Aufspannung denkbar, insbesondere auch als textiles Architekturelement bzw. Fassadenverkleidung an einem Gebäude.

### Ausführungsbeispiel:

In Labormustern konnte durch einen unterschiedlichen Schaumauftrag auf ein zweilagiges, vorstehend beschriebenes Trägergewebe die Variabilität verschiedenster Eigenschaften wie aus dem Diagramm nach Fig. 4 ersichtlich demonstriert werden. Bei dem Schaum handelte es sich um einen offenzellige Struktur aus folgenden Komponenten: Polyurethan mit Schaumhilfsmittel und Schaumstabilisator, Fluorcarbon, Ruß für schwarze Einfärbung und UV-Schutz und zum farblichen Angleich an das schwarze Grundgewebe. Die Schaumschicht 16 wurde auf die Schuss-Seite, die Kett-Seite und auf beide Seiten eines gegebenen Gewebes 12 aufgetragen. Wie sich aus den verschiedenen Prüfergebnissen ergibt, ist man durch den Schaumauftrag in der Lage, die Licht-, Solar- und UV-Transmission in weiten Bereichen zu beeinflussen. Gleichzeitig wirkt sich die offenzellige Schaumschicht auch auf die Luft- und Wasserdurchlässigkeit aus.

## Patentansprüche

1. Abschirmvorrichtung für Beschattungs- und Regenschutzzwecke mit einem flächig aufgespannten oder ausrollbaren, eine Abschirmung gegen Witterungseinflüsse, insbesondere gegen Sonneneinstrahlung und/oder Regen bildenden textilen Flächengebilde (12), welches ein Gewebe aufweist, wobei das textile Flächengebilde (12) eine zweilagige Gewebestruktur mit eine Kettfadenlage bildenden Kettfäden (24) und eine einseitig auf der Kettfadenlage aufliegende Schussfadenlage bildenden Schussfäden (26) aufweist, wobei die Kettfäden (24) und die Schussfäden (26) im Wesentlichen geradlinig gestreckt sind, wobei das Gewebe gitterartig miteinander verbundene Kettfäden (24) und Schussfäden (26) aufweist, wobei die Kettfäden (24) und Schussfäden (26) langgestreckt-rechteckige Gewebeöffnungen (28) begrenzen, und wobei die Gewebeöffnungen (28) längsseitig durch die Schussfäden (26) begrenzt sind, **dadurch gekennzeichnet, dass** auf das textile Flächengebilde (12) an einer Gewebeseite eine durch feste Schaumwände (32) voneinander getrennte Schaumporen (30) aufweisende Schaumschicht (16) durch ein Beschichtungsverfahren aufgebracht ist, wobei die Schaumschicht (16) offenporig ausgebildet ist, und wobei das textile Flächengebilde (12) an seiner Oberseite mit der Schaumschicht (16) versehen ist.

2. Abschirmvorrichtung nach Anspruch 1, **dadurch gekennzeichnet, dass** die Schaumporen (30) einen Durchmesser im Bereich von 0,01 bis 0,5 mm aufweisen.

3. Abschirmvorrichtung nach Anspruch 1 oder 2, **dadurch gekennzeichnet, dass** die Schaumschicht (16) aus einem aus der folgenden Gruppe ausgewählten geschäumten Kunststoffmaterial besteht: Polyurethan, Polyester, Polyvinylchlorid, Polyamide, Polyacrylate, Acryläureester und deren jeweilige Copolymere, Silikone.

4. Abschirmvorrichtung nach einem der Ansprüche 1 bis 3, **dadurch gekennzeichnet, dass** die Schaumschicht (16) mit einem Hydrophobierungsmittel wasserabweisend ausgerüstet ist.

5. Abschirmvorrichtung nach einem der Ansprüche 1 bis 4, **dadurch gekennzeichnet, dass** die Schaumschicht (16) dunkel eingefärbt ist, insbesondere durch Ruß oder Pigmente.

6. Abschirmvorrichtung nach einem der Ansprüche 1 bis 5, **dadurch gekennzeichnet, dass** die Schaumschicht (16) mit einem als UV-Filter und/oder IR-Reflektor wirkenden Additiv versehen ist.

7. Abschirmvorrichtung nach einem der Ansprüche 1 bis 6, **dadurch gekennzeichnet, dass** die Schaumschicht (16) durch Aufrakeln auf das textile Flächengebilde (12) aufgebracht ist.

8. Abschirmvorrichtung nach einem der Ansprüche 1 bis 7, **dadurch gekennzeichnet, dass** die Schaumschicht (16) mit einem Flächengewicht im Bereich von 10 bis 100 g/m² auf das textile Flächengebilde (12) aufgebracht ist.

9. Abschirmvorrichtung nach einem der Ansprüche 1 bis 8, **dadurch gekennzeichnet, dass** die Kettfäden (24) und die Schussfäden (26) durch Bindefäden (34) miteinander verbunden sind, wobei die Bindefäden (34) die voneinander abgewandten Außenseiten der Kett- und Schussfäden (26) umschlingen.

10. Abschirmvorrichtung nach einem der Ansprüche 1 bis 9, **dadurch gekennzeichnet, dass** das textile Flächengebilde (12) in einer Halte- oder Spannvorrichtung flächig gehalten ist.

11. Abschirmvorrichtung nach einem der Ansprüche 1 bis 10, **gekennzeichnet durch** eine Wickelvorrichtung (18), mittels derer das textile Flächengebilde (12) ausrollbar ist.

12. Abschirmvorrichtung nach einem der Ansprüche 1 bis 11, **dadurch gekennzeichnet, dass** das textile Flächengebilde (12) einen zu schützenden Bereich (22) vor Wettereinflüssen abschirmt.

## Claims

1. Shielding device for shading and rain-protection purposes, comprising a textile sheet material (12) which is tensioned or can be rolled out in a planar manner and forms a shield against weather influences, in particular against solar radiation and/or rain, which textile sheet material has a woven fabric, wherein the textile sheet material (12) has a two-layered woven structure comprising warp threads (24) forming a warp thread layer, and weft threads (26) forming a weft thread layer which on one face rests on the warp thread layer, the warp threads (24) and the weft threads (26) being tensioned in a substantially linear manner, wherein the woven fabric has warp threads (24) and weft threads (26) connected to one another in a lattice-like manner, the warp threads (24) and weft threads (26) defining elongate rectangular openings (28) in the woven fabric, the openings (28) in the woven fabric being delimited on the long side thereof by the weft threads (26), **characterized in that** a foam layer (16) which has foam pores (30) that are separated from one another by solid foam walls (32) is applied onto the textile sheet material (12) on one face of the woven fabric by means of a coating process, wherein the foam layer (16) is open-pored, and wherein the textile sheet material (12) is provided with the foam layer (16) on the upper side thereof.

2. Shielding device according to claim 1, **characterized in that** the foam pores (30) have a diameter in the range of 0.01 to 0.5 mm.

3. Shielding device according to either claim 1 or claim 2, **characterized in that** the foam layer (16) consists of a foamed plastics material selected from the following group:
polyurethane, polyester, polyvinylchloride, polyamide, polyacrylate, acrylic acid ester and the respective copolymers thereof, and silicone.

4. Shielding device according to any of claims 1 to 3, **characterized in that** the foam layer (16) is equipped with a hydrophobing agent in a water-repelling manner.

5. Shielding device according to any of claims 1 to 4, **characterized in that** the foam layer (16) is dyed a dark color, in particular using carbon back or pigments.

6. Shielding device according to any of claims 1 to 5, **characterized in that** the foam layer (16) is provided with an additive which acts as a UV filter and/or an IR reflector.

7. Shielding device according to any of claims 1 to 6, **characterized in that** the foam layer (16) is applied to the textile sheet material (12) by blade coating.

8. Shielding device according to any of claims 1 to 7, **characterized in that** the foam layer (16) is applied to the textile sheet material (12) in a surface weight in the range of 10 to 100 g/m².

9. Shielding device according to any of claims 1 to 8, **characterized in that** the warp threads (24) and the weft threads (26) are connected to one another by binding threads (34), the binding threads (34) wrapping around the outer faces of the warp and weft threads (26), which faces face away from one another.

10. Shielding device according to any of claims 1 to 9, **characterized in that** the textile sheet material (12) is held in a holding or tensioning device in a planar manner.

11. Shielding device according to any of claims 1 to 10, **characterized by** a winding device (18) by means of which the textile sheet material (12) can be rolled out..

12. Shielding device according to any of claims 1 to 11, **characterized in that** the textile sheet material (12) shields a region which to be protected against weather influences.

## Revendications

1. Dispositif de protection servant à créer de l'ombre et à protéger de la pluie avec une surface textile (12) déployée à plat ou déroulable, formant une protection contre les effets météorologiques, en particulier contre le rayonnement solaire et/ou la pluie, laquelle surface textile comprend un tissu, dans lequel la surface textile (12) comprend une structure de tissu à deux couches avec des fils de chaîne (24) formant une nappe de fils de chaîne et des fils de trame (26) formant une nappe de fils de trame reposant unilatéralement sur la nappe de fils de chaîne, dans lequel les fils de chaîne (24) et les fils de trame (26) sont étendus de manière essentiellement rectiligne, dans lequel le tissu comprend des fils de chaîne (24) et des fils de trame (26) reliés les uns aux autres en treillis, dans lequel les fils de chaîne (24) et les fils de trame (26) délimitent des ouvertures de tissu rectangulaires allongées (28), et dans lequel les ouvertures de tissu (28) sont délimitées longitudinalement par les fils de trame (26), **caractérisé en ce qu'**une couche de mousse (16) comprenant des pores de mousse (30) séparés les uns des autres par des parois de mousse fixes (32) est appliquée sur la surface textile (12) au niveau d'une face de tissu par un procédé de revêtement, dans lequel la couche de mousse (16) a une conception à pores ouverts, et dans lequel la surface textile (12) est dotée au niveau de sa face supérieure de la couche de mousse (16).

2. Dispositif de protection selon la revendication 1, **caractérisé en ce que** les pores de mousse (30) présentent un diamètre compris dans la gamme allant de 0,01 à 0,5 mm.

3. Dispositif de protection selon la revendication 1 ou la revendication 2, **caractérisé en ce que** la couche de mousse (16) est constituée d'une matière plastique expansée sélectionnée dans le groupe suivant : un polyuréthane, des polyesters, un poly(chlorure de vinyle), des polyamides, des polyacrylates, des esters d'acide acrylique et leurs copolymères respectifs, des silicones.

4. Dispositif de protection selon l'une des revendications 1 à 3, **caractérisé en ce que** la couche de mousse (16) est pourvue de manière hydrofuge d'un agent d'hydrophobisation.

5. Dispositif de protection selon l'une des revendications 1 à 4, **caractérisé en ce que** la couche de mousse (16) est colorée en foncé, en particulier par du noir de carbone ou des pigments.

6. Dispositif de protection selon l'une des revendications 1 à 5, **caractérisé en ce que** la couche de mousse (16) est dotée d'un additif agissant en tant que filtre UV et/ou réflecteur IR.

7. Dispositif de protection selon l'une des revendications 1 à 6, **caractérisé en ce que** la couche de mousse (16) est appliquée par égalisation à la racle sur la surface textile (12).

8. Dispositif de protection selon l'une des revendications 1 à 7, **caractérisé en ce que** la couche de mousse (16) est appliquée sur la surface textile (12) avec une masse surfacique comprise dans la gamme allant de 10 à 100 g/m².

9. Dispositif de protection selon l'une des revendications 1 à 8, **caractérisé en ce que** les fils de chaîne (24) et les fils de trame (26) sont reliés les uns aux autres par des fils de liaison (34), dans lequel les fils de liaison (34) s'enroulent autour des faces externes opposées les unes aux autres des fils de chaîne et de trame (26).

10. Dispositif de protection selon l'une des revendications 1 à 9, **caractérisé en ce que** la surface textile (12) est maintenue à plat dans un dispositif de maintien ou de tension.

11. Dispositif de protection selon l'une des revendications 1 à 10, **caractérisé par** un dispositif de bobinage (18), au moyen duquel la surface textile (12) est déroulable.

12. Dispositif de protection selon l'une des revendications 1 à 11, **caractérisé en ce que** la surface textile (12) protège une zone à protéger (22) contre les intempéries.
